# EUROPEAN PATENT APPLICATION

(11) **EP 4 215 489 A1**
(43) Date of publication of application: **26.07.2023**
(21) Application number: 21869708.4
(22) Date of filing: 15.09.2021
(51) Int. Cl.: C01F 11/18, C01F 11/46, C01B 32/60, B01D 53/62

(54) **METHOD FOR PREPARING INORGANIC COMPOUND BY USING RECYCLABLE RESOURCES TO REDUCE GREENHOUSE GAS EMISSIONS**

(30) Priority: 21.09.2020 KR 20200121282
(71) Applicant: Hyundai Oilbank Co., Ltd., Seosan-si, Chungcheongnam-do 31902 (KR)
(72) Inventor: LEE, Young Ho, Yongin-si Gyeonggi-do 17077 (KR); CHUNG, Yong Kwon, Seoul 08255 (KR); SUNG, Dae Jin, Seoul 05274 (KR); KIM, Cheol Hyun, Yongin-si Gyeonggi-do 16876 (KR); JUNG, Hae Won, Seosan-si Chungcheongnam-do 31904 (KR)
(74) Representative: Vossius & Partner Patentanwälte Rechtsanwälte mbB
(86) International application number: PCT/KR2021/012593
(87) International publication number: WO 2022/060086

(57) **Abstract**

The present invention relates to a method for preparing an inorganic compound by using recyclable resources to reduce greenhouse gas emissions and, more specifically, to a method for preparing an inorganic compound, wherein a carbonated inorganic compound can be prepared in a continuous pattern by capturing carbon dioxide generated at industrial sites, with a desulfurization byproduct, which is an industrial waste, serving as a medium, although not using a separate drying process and an additive for pH adjustment for promoting carbonation, thereby significantly reducing greenhouse gas and process costs compared with existing processes.

## Description

### [TECHNICAL FIELD]

The present invention relates to a method for producing inorganic compounds using circulating resources in order to reduce greenhouse gas emissions, and more specifically, to a method for producing inorganic compounds using circulating resources that can dramatically reduce greenhouse gases and process costs compared to existing processes and produce carbonated inorganic compounds continuously without using a separate drying process and pH control additives to promote carbonation by capturing carbon dioxide generated at industrial sites using desulfurization by-products, which are industrial wastes, as a medium.

### [BACKGROUND ART]

Domestic greenhouse gas emissions averaged 662 million tons of CO₂eq. per year from 2007 to 2017, with energy and industrial processes accounting for more than 94%. Among them, carbon dioxide has a global warming potential (GWP) of 1, which is low compared to other greenhouse gases, but the amount of carbon dioxide generated reaches 604 million tons CO₂eq., accounting for more than 91% of the total amount generated, making a great impact on global warming. In addition, the generation amount increased by 23% in 2017 compared to 2007, and it is becoming more serious as time goes on.

In industrial sites, electricity and steam are used as energy sources for processes, and boilers are operated to produce this energy source. Boilers mainly use fossil fuels, which produce sulfur oxides when burned because they contain sulfur. Emissions of sulfur oxides into the atmosphere are strictly controlled and are captured prior to release into the atmosphere to meet these regulations. One way is to use limestone to convert it into gypsum.

CaCO_{3(S)}→ CaO_{(S)} + CO_{2(g)} (>700°C)

CaO_{(S)} + SO_{2(g)} + 1/2O_{2(g)} → CaSO₄₍ₛ₎

Limestone traps sulfur oxides and suppresses atmospheric emissions. However, it contributes to global warming by emitting carbon dioxide, which offsets its significance.

On the other hand, sulfur oxides generated during the combustion of fuel react intensively with the outer surface of quicklime particles and are converted to gypsum, while the inside of the particles remains as quicklime and is discharged out of the process. Unreacted quicklime becomes a reactant capable of capturing carbon dioxide. Quicklime becomes slaked lime through a hydration reaction with water, which is produced as a carbonated inorganic compound by reacting with carbon dioxide in boiler exhaust gas.

CaO + H₂O → Ca(OH)₂

Ca(OH)₂ + CO₂ → CaCO₃ + H₂O

This inorganic compound is an eco-friendly material to which greenhouse gas reduction technology is applied, and it has high added value as it can be reused at industrial sites by replacing part of the amount of cement or concrete used.

A prior art for reducing carbon dioxide emission through a carbonation reaction with a material such as calcium is as follows.

Korean Patent Publication No. 10-1777142 relates to a method for capturing carbon dioxide using waste concrete fine powder, which involves performing a wet carbonation reaction by injecting waste concrete fine powder slurry and carbon dioxide into the bottom of a reactor with a low D/L ratio, discharging the reaction-completed product through the top of the reactor in a slurry state and performing a carbonation material separation process by a specific gravity difference. This technology is a continuous reaction, and the production volume is higher than that of non-continuous reactions, but carbonation occurs in the carbon dioxide injector and the injection nozzle is clogged, which can lead to unstable operation.

Korean Patent Publication No. 10-1395796 relates to a continuous carbonation method to suppress the clogging of the carbonation gas injection nozzle during a wet process and to enable a large-capacity process configuration. It relates to a method of filling a reactor with carbon dioxide and spraying a solution to be carbonated in small droplets from the top of the reactor to fall. However, when a large amount of cations to be carbonated are injected to increase the amount of carbon dioxide captured, carbon dioxide is changed to HCO³⁻ and highly soluble bicarbonate (Ca(HCO₃)₂) is produced. When the pressure is lowered after the discharge process, carbon dioxide is desorbed again (Ca(HCO₃)₂ → CaCO₃ + CO₂ + H₂O) and carbon dioxide is generated again, which lowers the efficiency of capturing carbon dioxide. In order to prevent this, a basic additive must be additionally added for pH control, and thus the process cost increases.

In addition, since moisture is commonly included in the product in the prior art mentioned above, filtration and drying processes are additionally required when obtaining it as a solid powder. And since greenhouse gases are generated by using fuel again to generate heat sources for drying, the value of greenhouse gas reduction is offset.

### [CONTENTS OF THE INVENTION]

### [PROBLEMS TO BE SOLVED]

The purpose of the present invention is to provide a method for producing inorganic compounds using circulating resources that can dramatically reduce greenhouse gases and process costs compared to existing processes and produce carbonated inorganic compounds continuously without using a separate drying process and pH control additives to promote carbonation by capturing carbon dioxide generated at industrial sites using desulfurization by-products, which are industrial wastes, as a medium.

### [TECHNICAL MEANS]

In order to achieve the technical purpose, the present invention provides a method for producing inorganic compounds using circulating resources comprising: a slurry preparation step of preparing a desulfurized gypsum slurry by mixing desulfurized gypsum with water; and an inorganic compound preparation step of supplying a carbon dioxide-containing gas to the desulfurized gypsum slurry and capturing carbon dioxide through a carbonation reaction to prepare an inorganic compound, wherein the prepared inorganic compound is in the form of a dried solid powder.

### [EFFECT OF THE INVENTION]

According to the method for producing an inorganic compound using circulating resources of the present invention, the inorganic compound produced through the carbonation reaction is discharged in the form of a solid powder, so a separate drying process and an additive for adjusting pH to promote carbonation are not required. In addition, since the temperature of the exhaust gas is used to maintain the reaction temperature, the production cost can be minimized compared to the existing process while minimizing the generation of greenhouse gases, thereby significantly improving the product unit.

### [Brief Description of the Figures]

Fig. 1 is a schematic view of a carbonation reactor of Example 1 in which the method for producing an inorganic compound according to the present invention is applied on a laboratory-scale.
Fig. 2 is a schematic view of a carbonation reactor of Example 2 in which the method for producing an inorganic compound according to the present invention is applied on a commercial-scale.
Fig. 3 is a schematic diagram of a wet carbonation reactor of Comparative Example 1 applied on a laboratory scale.
Fig. 4 is a result of X-ray diffraction analysis of desulfurized gypsum.
Fig. 5 is a result of SEM/EDS analysis of desulfurized gypsum.
Fig. 6 is a result of SEM/EDS analysis of inorganic compounds obtained after the carbonation reaction of Example 1.
Fig. 7 is a result of X-ray diffraction analysis of the inorganic compound obtained after the carbonation reaction of Example 1.
Fig. 8 is a result of X-ray diffraction analysis of the inorganic compound obtained after the carbonation reaction of Example 2.
Fig. 9 is a result of X-ray diffraction analysis of the inorganic compound obtained after the carbonation reaction of Comparative Example 1.

### [CONCRETE MODE FOR CARRYING OUT THE INVENTION]

The present invention is explained in more detail below.

The method for producing inorganic compounds using circulating resources according to the present invention comprises: a slurry preparation step of preparing a desulfurized gypsum slurry by mixing desulfurized gypsum with water; and an inorganic compound preparation step of supplying a carbon dioxide-containing gas to the desulfurized gypsum slurry and capturing carbon dioxide through a carbonation reaction to prepare an inorganic compound, wherein the prepared inorganic compound is in the form of a dried solid powder.

The method for producing inorganic compounds according to the present invention comprises a slurry preparation step of preparing a desulfurized gypsum slurry by mixing desulfurized gypsum with water.

The desulfurized gypsum used in the slurry preparation step is an industrial by-product, and in one embodiment, desulfurized gypsum produced in a CFBC (circulating fluidized bed combustion) boiler may be used.

Although not particularly limited, the desulfurized gypsum may comprise 40 wt% or more of CaO-for example, 40 to 80 wt% (where CaO also includes CaSO₄), and 15 to 35 wt% of SOs. Calcium compounds including SOs do not participate in the carbonation reaction in a stable state, and only the quicklime component participates in the carbonation reaction.

The desulfurized gypsum and water in the slurry preparation step may be mixed at a weight ratio of 25-45: 55-75-for example, 28-42:58-72, 30-40:60-70 or 32-38:62-68. In the method for producing the inorganic compound of the present invention, an additive for adjusting pH is not used in the slurry preparation step because carbon dioxide capture efficiency is high when the desulfurized gypsum slurry is prepared at the above weight ratio. If the weight ratio is out of the above range, the carbonation reaction between carbon dioxide and the desulfurized gypsum slurry does not occur smoothly, resulting in poor production of inorganic compounds and poor greenhouse gas reduction effects.

The method for producing an inorganic compound of the present invention comprises an inorganic compound preparation step of supplying a carbon dioxide-containing gas to the desulfurized gypsum slurry and capturing carbon dioxide through a carbonation reaction to prepare an inorganic compound.

In the inorganic compound preparation step, the carbon dioxide-containing gas may be an exhaust gas of a circulating fluidized bed combustion boiler. Greenhouse gas can be reduced by using exhaust gas from a circulating fluidized bed combustion boiler, which is an industrial by-product, as a carbon dioxide-containing gas, and process costs can be minimized by utilizing the thermal energy of the gas in the process, as will be described later.

In one embodiment, the boiler exhaust gas composition is as follows. Carbon dioxide is produced from limestone for combustion of fuel and desulfurization reactions, and is about 15 to 20 vol% of the exhaust gas. Nitrogen is 70 to 75 vol%, and moisture and oxygen are 3 to 6 vol% and 2 to 5 vol%, respectively. SOₓ and NOₓ are managed by TMS in accordance with environmental regulations.

In one embodiment, in the inorganic compound preparation step, a process temperature may be maintained at 100 to 150°C using a carbon dioxide-containing gas as a heat source. In addition, in the inorganic compound preparation step, a carbonation reaction may occur by contacting the carbon dioxide-containing gas and the desulfurized gypsum slurry in cross-flow or co-directional flow.

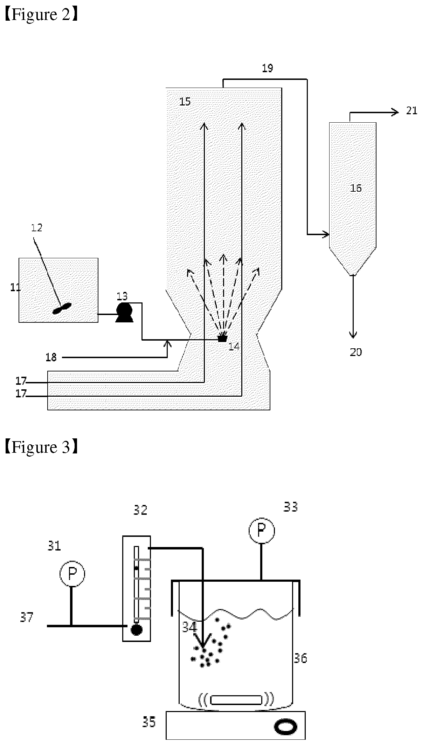

In the method for producing inorganic compounds according to the present invention, the carbonation reactor where the inorganic compound preparation step is performed is in the form of a flue-gas desulfurization (FGD) reactor, with a cross-flow or co-directional flow structure of the injection method, and the boiler exhaust gas flows from bottom to top (see Fig. 2). The reaction temperature is maintained at 100 to 150°C by carbon dioxide-containing gas-i.e., the exhaust gas. The desulfurized gypsum slurry is mixed in a storage tank equipped with an agitator and can be heated before being introduced into the carbonation reactor. The desulfurized gypsum slurry is injected into the carbonation reactor through injection nozzles, and atomizing air can also be injected into the nozzle to enable good atomization and formation of small droplets.

In the inorganic compound preparation step, under the above conditions the slaked lime contained in the desulfurized gypsum slurry reacts with the carbon dioxide contained in the carbon dioxide-containing gas to be converted into calcium carbonate, and the injected water is vaporized due to the heat generated during the carbonation reaction and the heat of the carbon dioxide-containing gas (boiler exhaust gas) and is discharged in the form of steam. Therefore, the inorganic compound produced in the present invention is in the form of a dried solid powder and does not require a separate drying process, thereby reducing process costs compared to prior art. The converted inorganic compound can be stored in the bag house in the form of a solid powder from which moisture has been removed. The inorganic compound comprises gypsum and calcium carbonate.

The present invention is explained in more detail through the following Examples and Comparative Examples. However, the scope of the present invention is not limited thereby in any manner.

### [Examples]

### Example 1

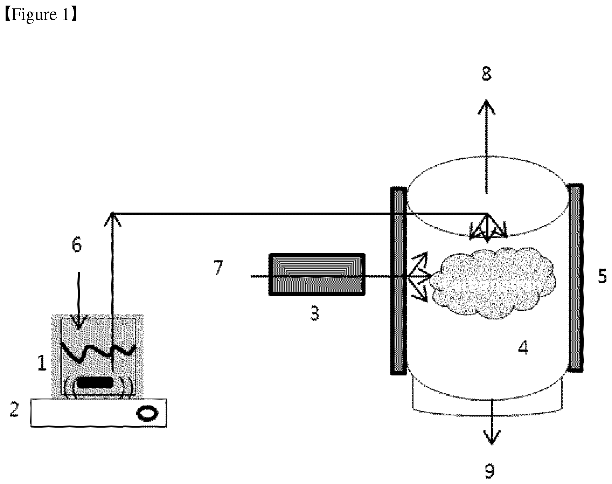

In laboratory-scale, a cylindrical carbonation reactor with cross-flow nozzle injection was used to capture carbon dioxide, and desulfurized gypsum slurry and gas were injected into the reactor (see Fig. 1).

The desulfurized gypsum slurry was prepared by mixing desulfurized gypsum and water in a slurry tank (1) with a weight ratio of 25-45:55-75 for desulfurized gypsum and water, respectively. A magnetic stirrer (2) was used to ensure that the quicklime particles were well mixed with the water, promoting hydration reaction. Prior to injection, the slurry tank was pressurized (6) with nitrogen at 1.5-2.0 bar.g and preheated to 95°C to suppress the temperature drop caused by the injection of the slurry into the reactor. The slurry was injected from the side of the cylindrical reactor (4) in a spray form.

The carbon dioxide gas (7) was preheated (3) to 110-120°C and injected into the cylindrical reactor from the top under a pressure of 3 bar.g.

The carbonation reactor was maintained at 110-120°C by the heat jacket (5) and the preheated carbon dioxide gas. After injecting the desulfurized gypsum slurry and carbon dioxide gas into the reactor, the generated material was collected at the bottom of the reactor (9). The carbon dioxide gas and evaporated water were discharged from the top of the carbonation reactor (8).

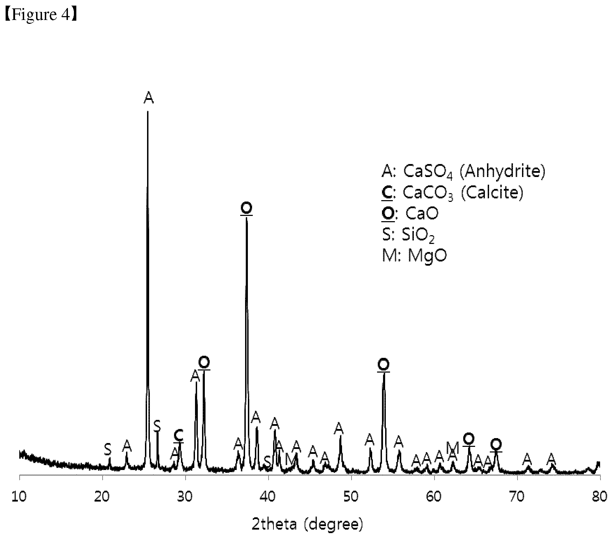

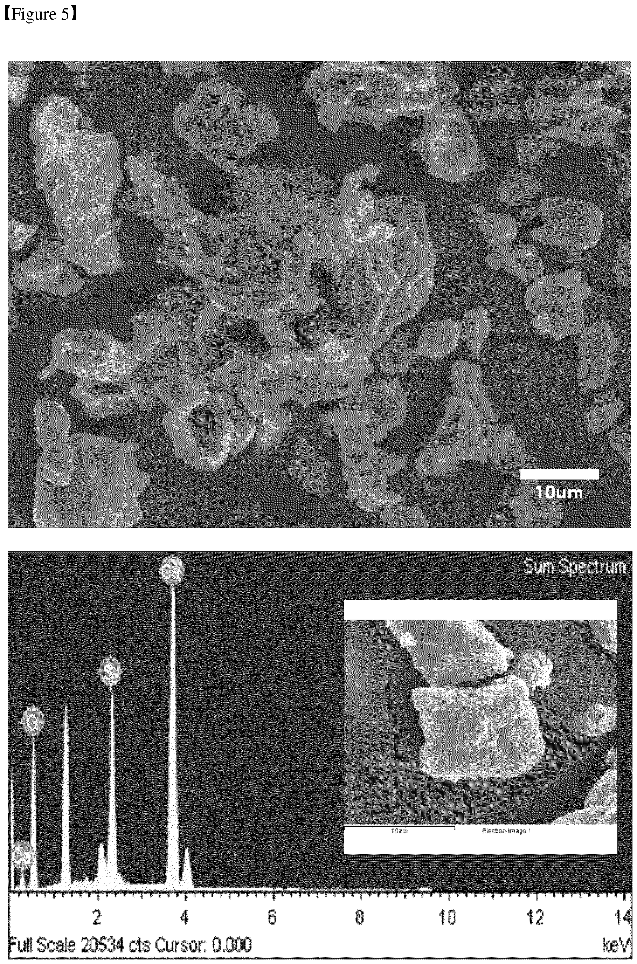

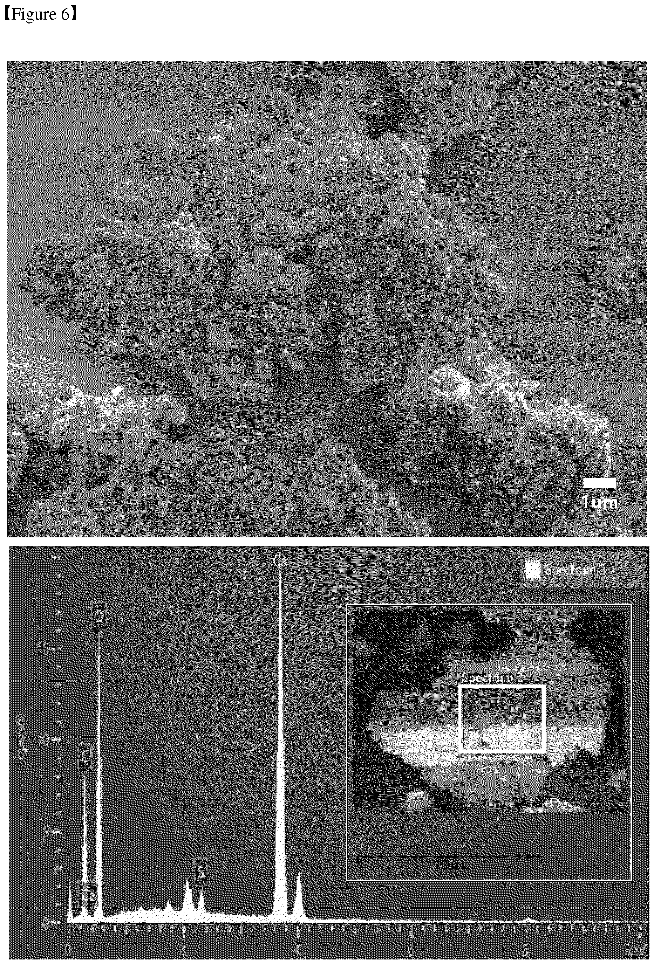

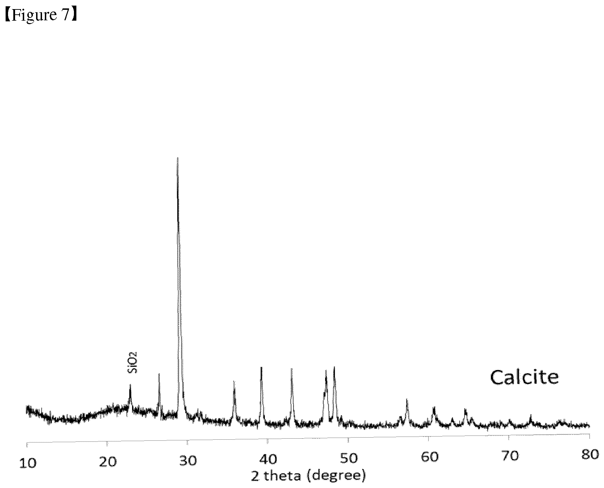

To confirm whether the desulfurized gypsum captures carbon dioxide through the carbonation reaction, SEM/EDS and X-ray diffraction analysis were performed (see Figs. 6 and 7). By comparing the X-ray diffraction and SEM/EDS analysis results of the desulfurized gypsum (see Figs. 4 and 5), it was confirmed that the quicklime in the desulfurized gypsum captures carbon dioxide to produce calcium carbonate (crystalline form: calcite).

### Example 2

In a commercial-scale operation for capturing carbon dioxide, a co-directional flow nozzle injection type carbonate reactor was used, and desulfurized gypsum slurry was injected into the reactor along with gas (see Fig. 2).

The desulfurized gypsum and water were added to the desulfurized gypsum slurry tank (11) at a weight ratio of 25-45:55-75, and the quicklime in the desulfurized gypsum was well contacted with water using an agitator (12) to cause a hydration reaction. The desulfurized gypsum slurry including the resulting slaked lime by the hydration reaction, was transported to the carbonate reactor (15) through a nozzle (14) by a pump (13) at a pressure of 3-5 bar.g, with an injection angle of 40-60°. To ensure uniform injection of the slurry into the carbonate reactor, atomizing air (18) was injected into the nozzle at a pressure of 2.5-4.5 bar.g.

The reaction temperature was maintained at 130 to 150°C by the flow of the CFBC boiler exhaust gas (17). Carbon dioxide contained in the exhaust gas from the CFBC boiler was converted into calcium carbonate through a carbonation reaction with slaked lime contained in the desulfurized gypsum slurry injected through the nozzle.

Inorganic compounds including the converted calcium carbonate were discharged to the upper part of the carbonation reactor along the boiler discharge gas flow (19) and transported to the bag house (16). Among them, solids containing inorganic compounds are discharged to the lower part (20) of the bag house, and after reaction, the exhaust gas is discharged to the upper part (21) and discharged to the atmosphere through the chimney. At this time, the water used in the production of slaked lime was vaporized by the temperature of the reactor during the carbonation reaction and was included in the exhaust gas after the reaction and released into the atmosphere. The inorganic compound thus produced could be obtained as a dried solid powder containing no moisture.

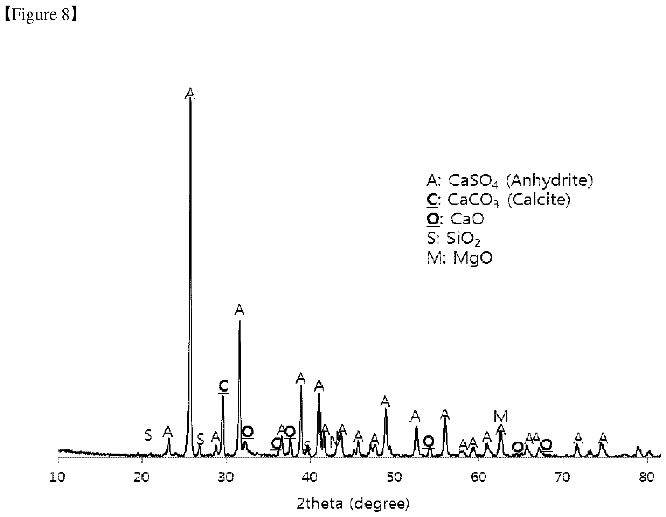

X-ray diffraction analysis was performed to confirm whether the quicklime in the desulfurized gypsum captured carbon dioxide through the carbonation reactor (see Fig. 8). After the carbonation reaction, the peak corresponding to quicklime was reduced, and the calcium carbonate peak was greatly enhanced, confirming that the carbonation reaction proceeded.

### Comparative Example 1

A laboratory-scale carbon dioxide capture experiment was conducted by applying a wet process, which is already a common process (see Fig. 3). Into the desulfurized gypsum slurry tank (36), the desulfurized gypsum and water is added at a weight ratio of 25-45:55-75, stirred at room temperature using a magnetic stirrer (35), and gas injection nozzle (34) into the desulfurized gypsum slurry was placed to inject carbon dioxide (37). At this time, the wet carbonation reactor was pressurized (31, 33) at 0.8 to 1.2 bar.g to promote the carbonation reaction, and carbon dioxide was injected, but the gas outlet was blocked to immediately inject as much carbon dioxide as consumed by the carbonation reaction. The reaction was terminated when the injection of carbon dioxide no longer occurred, and the degree of injection was determined using the ball flow meter (32). After completion of the reaction, the product was obtained as a solid powder through filtration and drying processes.

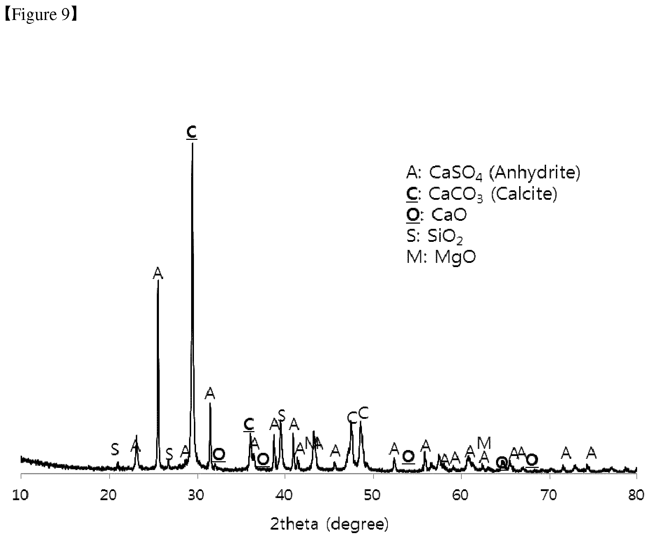

X-ray diffraction analysis was performed to confirm whether the desulfurized gypsum captured carbon dioxide through the carbonation reaction (see Fig. 9). After the carbonation reaction, the peak corresponding to quicklime was removed, and the calcium carbonate peak was greatly enhanced, confirming that the carbonation reaction proceeded.

As can be seen from the above experiment, since the inorganic compound in the form of a dried solid can be prepared in the method for producing the inorganic compound of the present invention, a continuous process can be performed without using a separate drying process and an additive for adjusting pH to promote carbonation. It was confirmed that the inorganic compound can be prepared with the method, and the process cost can be drastically reduced compared to the existing process.

However, in the case of manufacturing inorganic compounds through a conventional wet process performed in Comparative Example 1, since carbonation occurs in the carbon dioxide injector and the injection nozzle was clogged, the operation was unstable. And a separate filtration and drying process is required. Thus, it was confirmed that the economics and efficiency of the process are relatively lowered.

## Claims

1. A method for producing inorganic compounds using circulating resources comprising:
a slurry preparation step of preparing a desulfurized gypsum slurry by mixing desulfurized gypsum with water; and
an inorganic compound preparation step of supplying a carbon dioxide-containing gas to the desulfurized gypsum slurry and capturing carbon dioxide through a carbonation reaction to prepare an inorganic compound,
wherein the prepared inorganic compound is in the form of a dried solid powder.

2. The method for producing inorganic compounds using circulating resources according to claim 1,
wherein the desulfurized gypsum is produced in a CFBC boiler,
and comprises 40 to 80% by weight of CaO and 15 to 35% by weight of SOs.

3. The method for producing inorganic compounds using circulating resources according to claim 1,
wherein the desulfurized gypsum and water in the slurry preparation step are mixed in a weight ratio of 25-45:55-75.

4. The method for producing inorganic compounds using circulating resources according to claim 1,
wherein no additives for pH control are used in the slurry preparation step.

5. The method for producing inorganic compounds using circulating resources according to claim 1,
wherein the carbon dioxide-containing gas is an exhaust gas of a circulating fluidized bed combustion boiler.

6. The method for producing inorganic compounds using circulating resources according to claim 1,
wherein a process temperature is maintained at 100 to 150°C using a carbon dioxide-containing gas as a heat source in the inorganic compound preparation step.

7. The method for producing inorganic compounds using circulating resources according to claim 1,
wherein the carbonation reaction occurs by contacting the carbon dioxide-containing gas and the desulfurized gypsum slurry in a cross-flow in the inorganic compound preparation step.

8. The method for producing inorganic compounds using circulating resources according to claim 1,
wherein the carbonation reaction is performed by contacting the carbon dioxide-containing gas and the desulfurized gypsum slurry in a co-directional flow in the inorganic compound production step.

9. The method for producing inorganic compounds using circulating resources according to claim 1,
wherein the inorganic compound includes gypsum and calcium carbonate.
